(19) **Europäisches Patentamt / European Patent Office / Office européen des brevets**

(11) **EP 3 599 958 B1**

(12) **EUROPEAN PATENT SPECIFICATION**

(45) Date of publication and mention
of the grant of the patent:
**19.05.2021 Bulletin 2021/20**

(21) Application number: **18727471.7**

(22) Date of filing: **22.03.2018**

(51) Int Cl.:
***A47J 43/12*** *(2006.01)*

(86) International application number:
**PCT/US2018/023706**

(87) International publication number:
**WO 2018/175687 (27.09.2018 Gazette 2018/39)**

(54) **IMPROVED COMPRESSED GAS SUPPLY SYSTEM FOR MAKING WHIPPED CREAM**

VERBESSERTES DRUCKGASVERSORGUNGSSYSTEM ZUR HERSTELLUNG VON SCHLAGSAHNE

SYSTÈME D'ALIMENTATION EN GAZ COMPRIMÉ AMÉLIORÉ POUR LA FABRICATION DE CRÈME FOUETTÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.03.2017 US 201762475300 P**
**18.05.2017 CN 201720552986 U**
**21.03.2018 US 201815927447**

(43) Date of publication of application:
**05.02.2020 Bulletin 2020/06**

(73) Proprietor: **Praxair Technology, Inc.**
**Danbury, CT 06810 (US)**

(72) Inventors:
• **GUO, Qiong**
**Clarence**
**NY 14032 (US)**

• **CECULA, Shawn, M.**
**Niagara Falls**
**NY 14304 (US)**
• **GERRISTEAD, William, R.**
**Grand Island**
**NY 14072 (US)**
• **ZHU, Heng**
**Shanghai 201114 (CN)**

(74) Representative: **BRP Renaud & Partner mbB**
**Rechtsanwälte Patentanwälte**
**Steuerberater**
**Königstraße 28**
**70173 Stuttgart (DE)**

(56) References cited:
**US-A- 4 940 212    US-A- 4 993 599**
**US-A- 5 303 733    US-A1- 2007 000 952**

**Description**

**Field of the Invention**

The present invention generally relates to novel pressurized fluid supply systems for creating whipped cream having an optimum foam-like foam-like consistency and appearance. Particularly, the pressurized fluid systems are capable of efficient and controlled charging of pressurized fluid into a dispenser containing liquid whipping cream.

**Background of the Invention**

Restaurants and coffee shops and the like have used whipped cream dispensers for many years. Such whipped cream dispensers require pressurized fluid (usually gas) to dispense and whip the cream out through a nozzle or dispenser arrangement. The pressurized whipped cream dispensers of the prior art typically have utilized a pressurized nitrous oxide gas (N2O gas) cartridge holding about 8 grams of pressurized N2O gas. The cartridge of pressurized N2O gas is typically placed within a small cylindrically shaped holder. A piercable tip of the cartridge is pushed against a piercing pin arranged within a receiving bore on the whipped cream dispenser. When the holder is screwed all the way down onto the receiving bore of the whip cream dispenser, the piercing pin on the receiving bore is pushed into the piercable tip on the cartridge, thereby causing the cartridge to puncture. The punctured cartridge allows pressurized N2O gas to be released therefrom and pass into the overhead volume of the dispenser. The dispenser is typically agitated to provide mechanical force that promotes mixing of the N2O gas with the heavy cream, thereby allowing a majority portion of N2O gas to dissolve into the heavy cream and create a whipped foam-like consistency. As the N2O gas mixes with the heavy cream, nitrogen pairs with fatty molecules in the heavy cream and generates foam-like whipped cream when the nitrous oxide dissolves into the heavy cream. The remainder of the N2O gas stays in the overhead volume, such that a liquid-gas N2O equilibrium is substantially established. The N2O gas that occupies the overhead volume is under pressure and can be used to establish a discharge pressure when dispensing the whipped cream through a nozzle. The nozzle is operably attached to the dispenser to allow a user to dispense the whipped cream.

Numerous drawbacks of such whipped cream dispensers exist. For example, the individual N2O gas cartridges are expensive to utilize, costing anywhere from 35 cents to 70 cents per download. Further, such a cartridge/charger has limited reusable life, typically containing enough pressurized gas for only about ten to twelve servings per pint of whipped cream that is generated. Still further, replacement of an empty N2O gas cartridge is time intensive, requires several steps, namely that (i) the holder is removed from the whipped cream dispenser; (ii) the now empty cartridge is withdrawn from the piercing pin; (iii) a new cartridge is placed within the holder; and (iv) the holder is re-screwed onto the whipped cream dispenser. This is a time consuming and expensive procedure to accomplish the simple task of dispensing whipped cream. Further, such a cartridge (e.g., 8 gram size), when on the dispenser, hinders the vision of the person applying whipped cream to a food product US 2007/000952 discloses a pressurized delivery apparatus for use with existing portable whipped cream dispensers.

**Summary of the Invention**

The present invention is a portable, pressurized delivery apparatus adapted for charging nitrous oxide of a food-grade purity into a dispenser containing liquid heavy cream as it is defined in claim 1.
Other aspects, features and embodiments of the disclosure will be more fully apparent from the ensuing description and appended claims.

**Brief Description of the Drawings**

The objectives and advantages of the invention will be better understood from the following detailed description of the embodiments thereof in connection with the accompanying figures wherein like numbers denote same features throughout and wherein:

Figure 1 shows a schematic of the portable delivery apparatus connected to a whipped cream dispenser in accordance with the principles of the present invention;

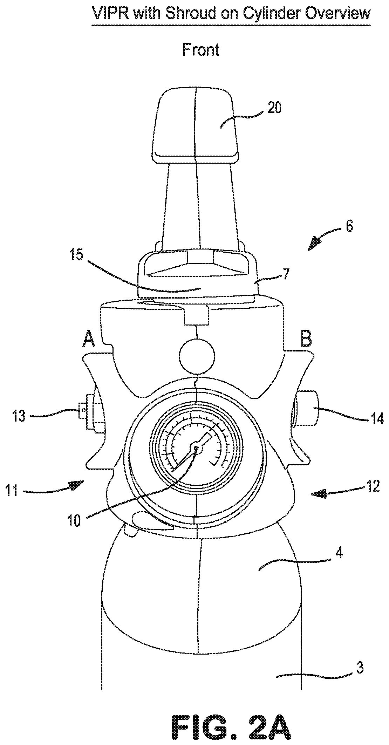

Figure 2a shows a front view of a valve integrated pressure regulator (VIPR) connected to a N2O vessel in accordance with the principles of the present invention;

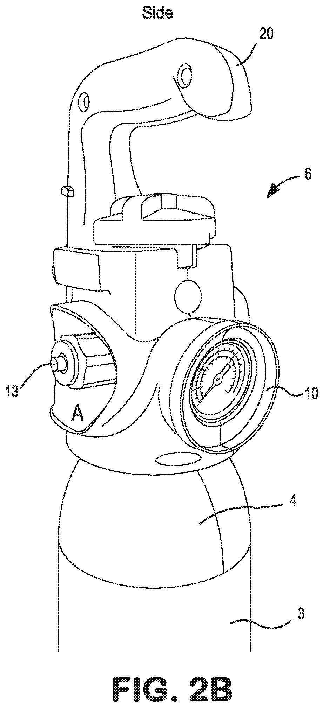

Figure 2b shows a side view of the VIPR;

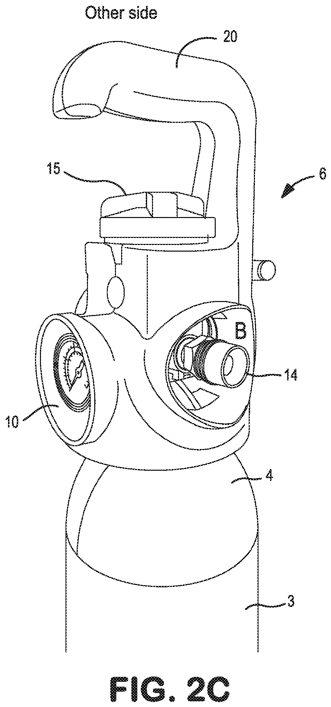

Figure 2c shows the side opposite to the front view of the VIPR; and

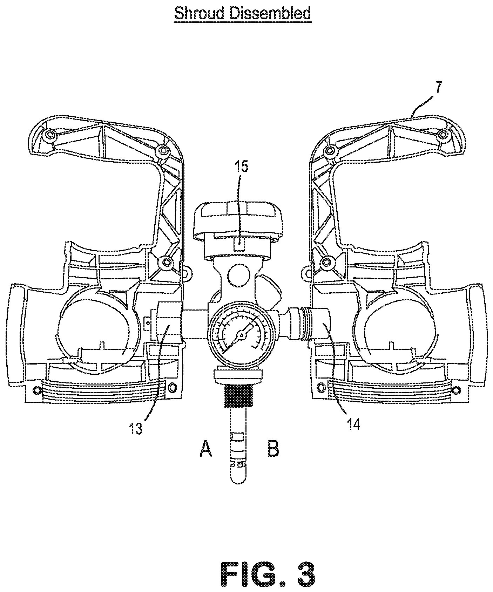

Figure 3 shows a shrouded structure in accordance with the principles of the present invention, wherein said shrouded structure is shown disassembled along with an on/off valve with a fill port and a delivery port;

Figure 4a shows a front view of the VIPR connected to a N2O vessel in accordance with the principles of the present invention;

Figure 4b shows a side view of the VIPR;

Figure 4c shows a side opposite to the front view of the VIPR;

Figure 5a shows a first view of the VIPR;

Figure 5b shows a second view of the VIPR; and

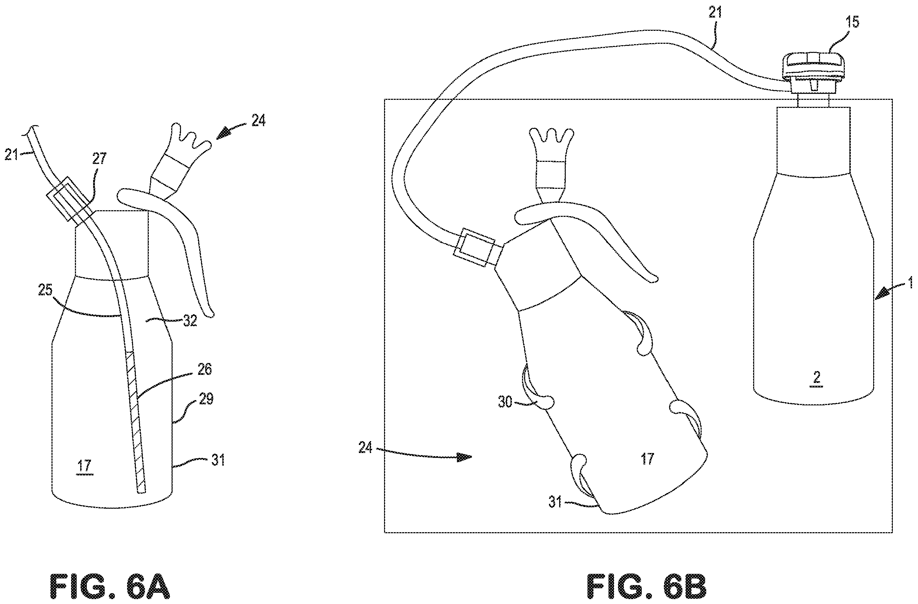

Figures 6a and 6b show an optional dispenser kit, which may include a dip tube with sparger and/or oscillating arm-like structures configured to auto-vibrate to promote agitation of the heavy whip cream contents and N2O gas contained therewithin.

## Detailed Description of the Invention

It should also be understood that the drawings are not drawn to scale, and in certain instances, details in the drawings have been omitted which are not necessary for an understanding of the embodiments, such as conventional details of fabrication and assembly. The drawings provided herein are intended to illustrate the principles by which the present invention can be carried out.

As used herein and in the claims, the terms "conduit" means flow paths within the portable, pressurized delivery apparatus for delivery of N2O to and from the portable, pressurized delivery apparatus, in which said flow paths are formed by any conventional piping, hoses and the like.

"Connected" as used herein means a direct or indirect connection between two or more components by way of conventional piping and assembly or other conduit, including, but not limited to valves, pipe, conduit and hoses, unless specified otherwise.

"Vessel" as used herein means any storage, filling or delivery vessel capable of being subject to pressure, including but not limited to, cylinders, dewars, bottles, tanks, barrels, bulk and microbulk, canisters, dispensers and the like.

Unless indicated otherwise, the term "N2O" as used herein and throughout the specification is intended to refer to a liquefied gas or vapor, or combination thereof.

The present invention has emerged from the shortcomings of the conventional whip cream dispensers utilizing N2O gas cartridges. The present invention offers a novel whipped cream pressurized N2O gas charging system capable of producing whip cream having an optimum foam-like foam-like consistency and appearance, and further wherein the structural attributes of the pressurized N2O charging system allow for efficient and controlled charging of pressurized N2O gas into a dispenser containing liquid whipping cream. An optional dispensing kit can enhance formation of the whip cream. The charging system of the present invention replaces the individual nitrous oxide cartridges, which is generally used for one-time usage and is generally a time-consuming, expensive and labor intensive process.

The present invention relates to novel components of the whipped cream dispensing arrangement that represents a significant improvement over conventional nitrous oxide dispensing packages used for production of whip cream. Together with the new components proposed, the present invention also involves associated procedures to make whipped cream which are safer and easier for the operator compared to conventional whip cream charging systems and procedures.

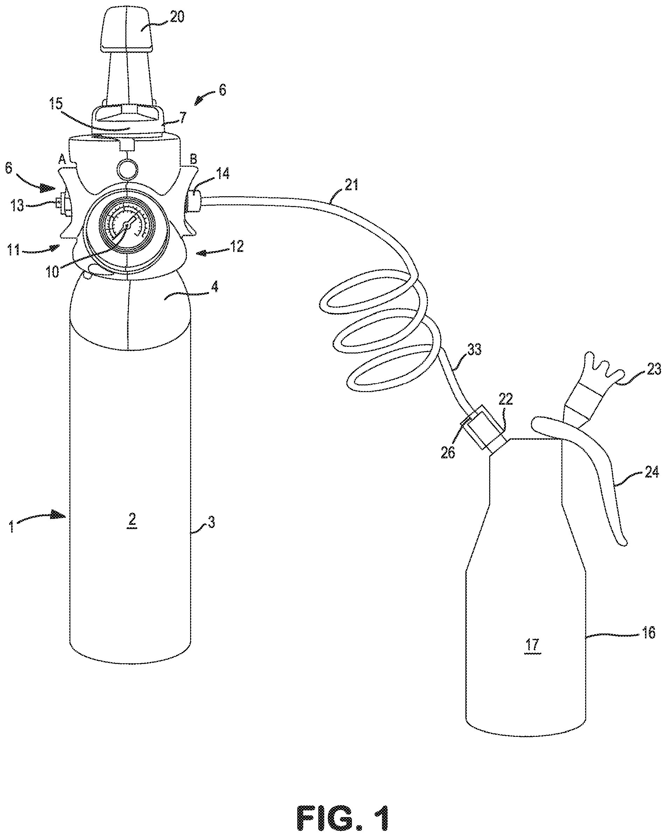

In one embodiment of the present invention, and as shown in Fig. 1, a portable, pressurized delivery apparatus 1 is provided. The portable delivery apparatus 1 is specially adapted for charging nitrous oxide of a food grade purity (i.e., referred to herein as "food-grade N2O") into a whip cream dispenser 16 that contains liquid heavy cream 17. Unless specified otherwise, "food-grade N2O" as used herein is expressed on a volume basis and intended to mean a certain purity level of N2O as established by various regulatory authorities, including the Food and Drug Administration (FDA). By way of illustrative examples, and not intending to be limiting, the food-grade N2O on a volume basis, may have a purity level of 97 v/v% or higher, 99 v/v% or higher, or 99.9 v/v% or higher, where v/v% is concentration of N2O per total volume. It should be understood that other purities levels for food-grade N2O as established by the FDA and other regulatory bodies are contemplated by the present invention. The portable, pressurized delivery apparatus 1 comprises a vessel 3 containing a bulk quantity of liquefied food-grade nitrous oxide 2, which is suitable for making whip cream and that is stored within the interior region 5 of the vessel 3. The vessel 3 is characterized by an effective diameter and longitudinal axis. The effective diameter is reduced to a tapered region 4 along the longitudinal axis at a top section of vessel 3. The vessel 3 is further defined by an interior region 5 of the vessel 3. The interior region 5 has a volume capacity expressed as a water volume of up to about 10 L in which the N2O gas 2 is occupied therewithin and maintained under pressure.

At room temperature (e.g., 20-25 °C), the vapor pressure of N2O gas 2 is approximately 5272 kPa (750 psig), which generally is expected to remain substantially constant when the vessel 3 is maintained indoor at ambient conditions as a result of the production, use and consumption of the whipped cream occurring indoor at said ambient conditions. The present invention recognizes that the vessel 3 may be exposed to conditions during filling, preparation, or transportation of the gas vessels 3 that can create a temperature rise or excursion within the interior region 5. As a result the vessel 3 is constructed to be rated above 12512 kPa (1800 psig) to taken into account the associated pressure rise or excursions corresponding to such temperature rise or excursions. The size of the compressed gas vessel 3 ranges from 1-10 L water volume, preferably 3-7 L, and more preferably 3.5-5.5 L. The gas vessel 3 is sufficiently compact to fit a confined area, and is mobile for ease of transportability within the confined area. In one example, the vessel 3 can occupy a footprint ranging from 1-3 ft2.

To achieve optimized appearance and foam-like consistency of the whip cream, the charging of the required mass amount of food-grade nitrous oxide gas occurs under precise control of delivery pressure of N2O into a downstream receiving unit that is a whipped cream dispenser 16. Such charging occurs by use of a specific system of the present invention and its associated delivery components, which will now be explained in greater detail. The portable, pressurized delivery apparatus 1 further includes a cylinder on-off valve 15, as shown in the Figures. The on-off valve 15 is configured to allow flow of N2O gas 2 from the interior region 5 of vessel 3 into a delivery port 14 through which the N2O gas flows towards an inlet of a dispenser 16 (Figure 1). The on-off valve 15 is also configured to allow flow of N2O gas from a source (not shown) to a fill port 13 of vessel 3 into which the N2O flows into the interior region 5 of the vessel 3. In this manner, the on-off valve 15 can allow a flow of N2O into the vessel 3 from the source, and can also allow a flow N2O gas 2 out from the vessel 3 and into a dispenser 16 for whipping a liquid heavy cream 17 contained therein. It should be understood any suitable on-off valve 15 may be used, including a knob-like structure, lever actuated handle or any other valve structure that can function to open and close the fill port 13 and delivery port 14, and thereby selectively allow flow into and out of the vessel 3.

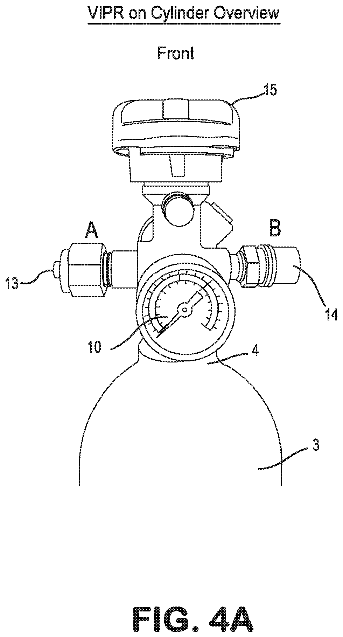

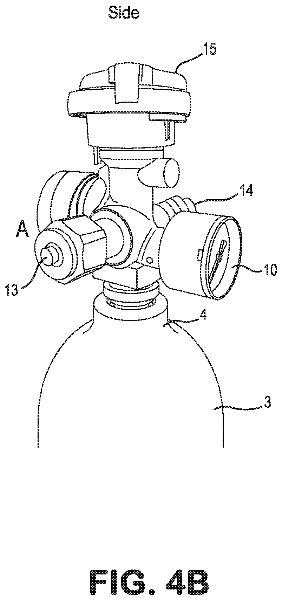

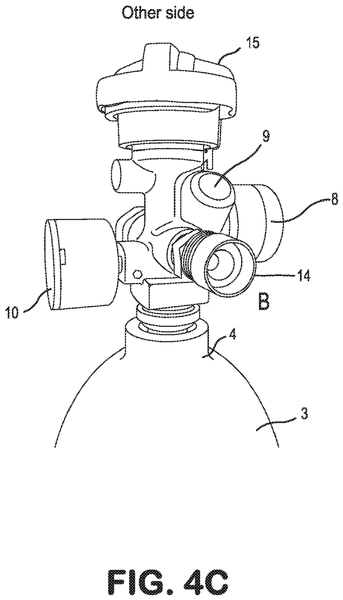

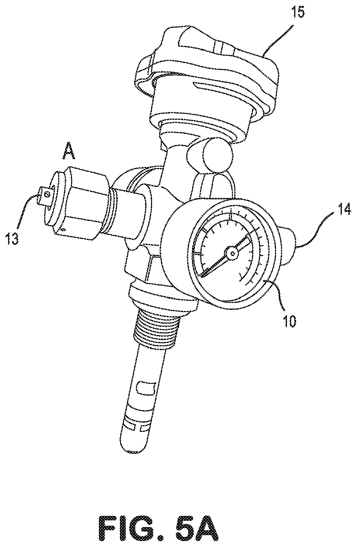

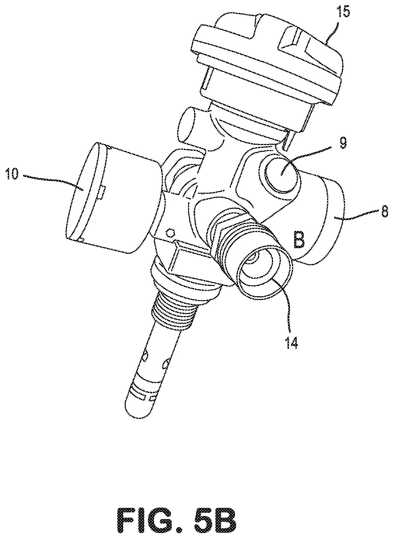

The portable, pressurized delivery apparatus 1 further includes a pressure relief device 9 (as can be seen in Figs. 4C, 5B) that is operably connected to an outlet 19 of a pressure regulator 8 (as can be seen in Figs. 4C, 5B) to protect the dispenser 16 from over-pressurization. The pressure relief device 9 is configured to relieve pressure in the apparatus 1 to a level that is at or below a pressure rating of the dispenser 16.

Pressure regulator 8 is also included. Figure 4c shows that the pressure regulator 8 is in communication with delivery port 14. The pressure regulator 8 functions to control the delivery pressure of N2O gas 2 withdrawn from the interior region 5 of vessel 3. Preferably, the pressure regulator 8 is configured to deliver said N2O gas 2 out from the vessel 3 at a preset delivery pressure ranging from 689 kPa (100 psi) to 2068 kPa (300 psi) into said dispenser 16 containing said liquid heavy cream 17. The pressure regulator 8 includes an orifice that is configured to receive food-grade N2O at a vessel pressure from the interior region 5 of vessel 3 and thereafter reduce the vessel pressure to the preset delivery pressure. The orifice thereby serves to maintain a controlled flow for the N2O gas stream at an optimum delivery pressure, thereby allowing N2O gas to enter into the whipped cream dispenser 16 with the optimal amount of pressurized N2O at a controlled delivery pressure, in accordance with the principles of the present invention, to whip the liquid heavy cream 17 contained therein.

The apparatus 1 further includes a valve integrated pressure regulator (VIPR 6) as illustrated in the Figures. The VIPR 6 is defined, at least in part, by multiple components, including pressure regulator 8; pressure relief device 9; pressure gauge 10; fill port 13 along the first portion 11 of VIPR 6; a delivery port 14 along the second portion 12 of VIPR 6; and the on-off valve 15. The pressure regulator 8; the pressure relief device 9; the on-off valve 15; and the pressure gauge 10 are substantially encapsulated within a shrouded structure 7. The VIPR 6 is preferably a single unit that integrates all of the components. Unlike conventional N2O dispensers and charging systems for whipping a liquid heavy cream, the present invention embodies a VIPR 6 that provides benefits of ease of use, improved safety and cost savings by eliminating use of N2O cartridges. Additionally, the VIPR 6 is structurally configured to have a compact design so as to maintain overall portability of the apparatus 1.

The VIPR 6 has a filling port 13 along the first portion 11 of the VIPR 6 and a delivery port 14 along the second portion 12 of the VIPR 6, as shown in the Figures. Such a structural configuration of the VIPR 6 enables ease of purging and filling. The filling port 13 preferably includes appropriate connections (e.g., CGA) to allow connection to a check valve. The check valve serves to prevent back-fill when filling the interior region 5 of vessel 3 with N2O. A dust cap (not shown) may also be incorporated to reduce or substantially eliminate contamination of dust particulates, thereby preserving the food grade purity of the N2O. The delivery port 14 along the second portion 12 connects with a bridging unit 33 to provide a conduit pathway for N2O molecules to flow therealong and into the whipped cream dispenser 16.

The pressure gauge 10 is situated in the front section or top portion of the VIPR 6. Such location of the pressure gauge 10 within the VIPR 6 allows for a clear and direct indication of the pressure of N2O 2 within interior region 5 of the vessel 3. The pressure gauge 10, in one embodiment, may incorporate different visual indicators, such as colors, each of which corresponds to a particular operating pressure, whereby a first color corresponds to a desired first operating pressure range which allows use of the vessel 3; a second color corresponds to an insufficient second pressure range, thereby requiring removal of the vessel 3 from use; and a third color corresponds to a pressure regime between the desired first operating pressure range and the insufficient second pressure range, thereby requiring monitoring of the pressure of N2O 2 during use, with the expectation the vessel 3 will be reduced to the insufficient second pressure range in a relatively short period of operational time. By way of example, the color green can correspond to a pressure of N2O 2 of approximately 4583 to 5962 kPa (650-850 psig) within interior region 5 of vessel 3. A user at the site of apparatus 1 can visually observe the green color and realize the pressure of N2O 2 in vessel 3 is adequate and the N2O 2 can be charged into a whip cream dispenser 16 to produce whipped cream of an optimum foam-like consistency and appearance. The color red on the pressure gauge 10 can correspond to a pressure of N2O 2 in vessel 3 of 101 to 3893 kPa (0-550 psig), meaning the amount of food-grade nitrous oxide 2 in vessel 3 is insufficient to produce whip cream of any foam-like consistency, thereby alerting a user to replace or replenish the vessel 3 with higher amounts of N2O 2 for suitable production of whip cream of optimum foam-like consistency and appearance. A yellow color on pressure gauge 10 can correspond to a pressure of N2O 2 between about 3893 to 4583 kPa (550-650 psig), meaning the pressure of the N2O 2 in vessel 3 should be monitored with the expectation the vessel 3 will be reduced to the insufficient second pressure range in a relatively short period of operational time and will then need to be replaced or filled with a higher amount of N2O sufficient for resuming the production of whipping the liquid cream 17.

As shown in the Figures, the pressure regulator 8 is situated within the main body of the VIPR 6. The pressure regulator 8 is configured to provide a fixed outlet pressure of N2O that is charged from vessel 3 and into dispenser 16. The pressure regulator 8 is adequately concealed within VIPR 6 to prevent customers or end users from accessing the settings of the pressure regulator 8, which would cause the pre-set delivery pressure to be changed. Unlike conventional charging systems, the apparatus 1 of the present invention has a regulator 8 situated within the VIPR 6, such that said regulator 8 is resistant to tampering by customers or end-users. In other words, the manufacturer (e.g., preferably the industrial gas manufacturer or vessel manufacturer) is responsible for pre-setting the pressure regulator 8 to achieve the necessary delivery pressure.

In accordance with the principles of the present invention, the pressure regulator 8 is pre-set according to the following empirical relationship discovered by the inventors of the present invention:

$$P = c + kR_{CD} \hspace{3cm} \text{(a)}$$

where P is the setting of the pressure regulator 8 (psig) and represents the target delivery pressure ("target P") of N2O from the vessel 3 into dispenser 16 to optimize whipping of the liquid heavy cream 17 contained therein; $R_{CD}$ is the ratio between a volume of the liquid heavy cream 17 in the dispenser 16 and a total volume of the dispenser 16; and c and k are empirical constants. $R_{CD}$ is preferably between about 0.4-0.8, and more preferably between about 0.55-0.7; c is -122.5; and k is 520. The constants c and k are fitted parameters from the experimental results obtained by the inventors. Given a specific whipped cream dispenser 7 having a certain volume, the initial setting of the pressure regulator 8, which is connected to the vessel 3, can be calculated by the above mentioned formula (a), and adjusted accordingly, as may be desired, to produce whipped cream in the dispenser 16 with an optimized foam-like consistency and appearance. The inventors have discovered that the target P is preferably within a range that is plus or minus 10% of the target P to generate the optimum delivery pressure. In other words, P can range from about $.9*( c+ kR_{CD})$ to about $1.1 *(c+ kR_{CD})$. Otherwise, when the target P is pre-set or tuned to be outside the allowable range (i.e., P is above 110% of target P or below 90% of target P), the quality of whipped cream as defined by its appearance and foam-like consistency is poor. In particular, the inventors have observed that when the pressure is 110% of target P, the whipped cream appears puffier than necessary and the edge of the whipped cream appears rough and fluffy. Conversely, when the pressure is 90% of the target P, the whipped cream exhibits excessive flowability and cannot hold its shape.

The VIPR 6 also comprises a shroud 7. The shroud 7 has a specific structure as shown in the Figures that offers drop protection and which can meet drop test requirements. The shroud 7 includes an easy-to-carry handle 20 for mobile usage and transportability. The handle 20 can simplify lifting and handling of the apparatus 1. The shroud 7 is preferably made of suitable materials that can withstand stresses and strains; and also protect the body of the pressure regulator 8 and pressure gauge 10. The shroud 7 is detachable such that an end-user can remove and replace the shroud 7 onsite as necessary. It should be understood that the present invention contemplates other types of shrouds that provide similar functionality as the design shown in the Figures.

The portable, pressurized delivery apparatus 1 also comprises a bridging unit 33 to connect the compressed gas vessel 3 from the delivery port 14 located on the second portion 12 of the VIPR 6 to the receiving bore 27 of the dispenser 16 by way of one or more fittings. The bridging unit 33 preferably includes a flexible hose 21 with a check valve 22The flexible hose 21 is preferably made with polymeric materials. The hose 21 shall be chemically compatible with food-grade nitrous oxide and mechanically capable to handle the necessary working pressure (i.e., the delivery pressure P of the N2O flowing through hose 21). The delivery end of the hose 21 can be connected onto the receiving bore 27 of the whipped cream dispenser 16. The check valve 22 opens by mechanical force and thus provides a flow pathway for food-grade nitrous oxide to enter into the dispenser 16. The check valve 22 closes when disconnecting from the dispenser 16 and keeps all residue gas in the hose 21 without escaping. In this manner, the operator avoids or substantially reduces the risk of any inadvertent release or exposure of food-grade nitrous oxide into the atmosphere.

While a flexible hose 21 has been described in connection with the production of whipping cream of optimum appearance and foam-like consistency, it should be understood that the bridging unit 33 may alternatively include any suitable conduit that can provide a flow path to receive N2O at a target P delivery pressure from the vessel 3 into the dispenser 16.

Having described the structural components of the portable, pressurized delivery apparatus 1, a method for operating the apparatus 1 in a N2O charging procedure to make whipped cream of optimum foam-like consistency and appearance is now described. A N2O source container (not shown) is assembled and connected to the vessel 3. The VIPR 6 is installed onto the vessel 3. The VIPR 6 contains the components as described hereinbefore. Next, the vessel 3 is filled with liquefied nitrous oxide from the N2O source container. Assuming the filling occurs at room temperature (i.e., about 20 deg C), the liquefied nitrous oxide will exert a vapor pressure of about 5272 kPa (750 psig). In this regard, the pressure gauge 10 on the vessel 3 is checked and expected to read about 5172 kPa (750 psi). The filling of liquefied N2O preferably occurs by the industrial gas manufacturer. However, it should be understood that the system of the present invention can be filled by other operators.

Flexible hose 21 is connected onto the outlet of pressure regulator 8. The integrity of the flexible hose 21 is confirmed to be free of cracks or over-temperature damages, as may be evident by color change or deformation.

The dispenser 16 is loaded with liquid heavy cream 17 to a certain level. Optional additives can also be loaded therein to complete the formulation, such as sugar, syrup and flavoring agents. Having loaded into the dispenser 16 the necessary liquid heavy cream 17 and optional additives, a cap is engaged onto a top portion of the dispenser 16 to isolate the contents therein.

Next, the target delivery pressure P is calculated based on the formula (a) which takes into account (i) the amount of liquid heavy cream 17 loaded into dispenser 16; and (ii) the total volume of the dispenser 16. The target delivery pressure P represents the required charging pressure at which the N2O is charged into the dispenser 16. Pressure regulator 8 is tuned in advance by the manufacturer (e.g., industrial gas manufacturer or vessel manufacturer) so that the customer or end-user receives a N2O-containintg apparatus 1 that is ready to use. As such, the pressure regulator 8 is tuned to be pre-set to this target pressure P. The delivery end of the flexible hose 21is connected to the receiving bore 27 on the dispenser 16. Next, the on-off valve 15 is configured into the open position. Nitrous oxide gas is withdrawn from vessel 3 and reduced from its vessel pressure (i.e., about 5272 kPa (750 psig) at 20 C) to the target P by pressure regulator 8, which has been pre-set or tuned to the target P delivery pressure in accordance with the formula (a) hereinbefore described. The N2O flows along flexible hose 21 and is charged into the dispenser 16, and optionally through a dip tube 25 with sparger 26 (via an optional dispenser kit 24 to be explained herein below) whereby the end portion of the sparger 26 is immersed a certain depth into the liquid heavy cream 17. The N2O continues to enter dispenser 16 until the pressure difference is or approaches approximately 101 kPa (0 psig), at which point the filling automatically stops. Having introduced the liquefied N2O into the interior region 5 of vessel 3, the dispenser 16 is manually or automatically agitated, preferably about 10-20 times if the agitation is done in a non-continuous manner. As the N2O gas mixes with the liquid heavy cream 17, nitrogen pairs with fatty molecules in the heavy liquid cream 17 and generates foam-like whipped cream when the food-grade nitrous oxide dissolves into the heavy cream. In this manner, the liquid heavy cream 17 is transformed into whipped cream having an optimum appearance and foam-like consistency.

The apparatus 1 remains at the customer or user site and can be used as a source of N2O to charge N2O into the dispenser 16 to make multiple batches of whipping cream in accordance with the principles of the present invention, whereby the appearance and foam-like consistency of the whipping cream is optimized by virtue of the apparatus 1 and the method by which the apparatus 1 is operated. Additionally, during such timeframe, no replacement of N2O cartridges is necessary. The pressure gauge 10 on the vessel 3 is periodically or systematically checked to ensure adequate supply of vapor N2O remains in the headspace of vessel 3. When the pressure gauge 10 indicates that the pressure within the headspace of vessel 3 reads below a certain level (e.g. 3792 kPa (550 psig)), the vessel 3 is preferably replaced with a new, replenished vessel 3 and the depleted vessel 3 is refilled. Alternative means for determining when to replace and refill the vessel 3are contemplated, including utilizing pressure gauge 10 with one or more visual color indicators each of which corresponds to a certain pressure range as described hereinbefore, thereby allowing the user a reliable and simple means to assess whether the vessel 3 is depleted or approaching depletion.

The flexible hose 21 is disconnected from the dispenser 16. The check valve 22 on the delivery end of the flexible hose 21 maintains the hose 21 under sufficient pressure. In this manner, no gas leaks out to the atmosphere when disconnecting the hose 21, thereby rendering the operation safe. The on/off valve 15 is configured from the on to off position.

At this point, the whipped cream is ready to be dispensed from the dispenser 16. The food-grade N2O gas that occupies the overhead volume of the dispenser 16 is under pressure, which can be used to establish a discharge pressure that forces the whipped cream through a nozzle that is operably attached to the dispenser 16 to allow a user to dispense the whipped cream onto various consumer products (e.g., various coffee products, including cappuccino, latte and the like). When all of the whipped cream is consumed or when insufficient overhead N2O vapor pressure exists to dispense said whip cream from the bottom portion 31 of dispenser 16, the various components of the dispenser 16 can be disassembled, cleaned and appropriately dried.

Also described herein but not falling under the scope of the claims, an optional dispenser kit 24 can be used with the dispenser 16 to enhance formation of a foam-like consistency and appearance of the whipped cream in the dispenser 16 containing liquid heavy cream 17, which occupies a bottom portion 31 therein. The dispenser kit 24 can include a detachable dip tube 25 with a sparger section 26 therealong along the bottom portion of dip tube 25 that can be assembled onto a receiving bore 27 of dispenser 16, as shown in the Figures. Alternatively, or in addition thereto, the dispenser kit 24 includes one or arm-like structures 30 configured to at least partially extend around an outer surface 29 of dispenser 16. The arm-like structures 30 can oscillate at a pre-set frequency to at least partially mix the contents of the N2O, which is charged into the interior of the dispenser 16, with the liquid heavy cream 17 contained in the dispenser 16.

The detachable dip tube 25 can be secured onto the dispenser 16 by various means, including preferably screwing onto threads of the receiving bore 27 of dispenser 16 for ease of assembly and disassembly thereto. Other means besides mechanical engagement are contemplated, such as welding, thereby causing the dip tube 25 to permanently remain affixed to the dispenser 16. The length of the detachable dip tube 25 is preferably is more than about ½ of the depth of the dispenser 16, and more preferably more than about ¾ of the depth of the dispenser 16. The sparging section 26 may be operatively or integrally connected at the end of the detachable dip tube 25. Preferably, the sparging section 26 is made of porous stainless steel media. The length of the sparging section 26 can be more than about ½ of the length of the dip tube 25, and is immersed under the level of the liquid heavy whipping cream 17. In this manner, when the portable, pressurized delivery apparatus 1 with food-grade N2O 2 contained therein is connected to the whipped cream dispenser 16, the N2O gas is delivered along the flexible hose 21, and into the top section 32 of dispenser 16. The sparger section 26 can generate gas bubbles through the liquid heavy cream 17. The gas bubbles provide significantly more interface between nitrous oxide gas and the liquid heavy cream 17, which allows for enhanced mixing that is achieved in a shorter time and requires less shaking of the whipped cream disperser 16 after N2O gas charging, in comparison to conventional food-grade nitrous oxide charging systems, including N2O cartridges.

The dispenser kit 24 may optionally include one or arm-like structures 30 as part of an automatic shaker or vibrating unit that can be used in place of or in addition to a user manually agitating the dispenser 16. The auto-shaker can have a pair of twin arm-like structures 30 (i.e., four arm-like structures) that can grasp and maintain the body of the dispenser 16 without slippage. The auto shaker unit may have a knob-like or other user activated structure to control and adjust how many times, continuously, or intermittently, the dispenser 16 is agitated, and for how long a duration. The force that the arm-like structures 30 can apply onto the dispenser 16 shall be sufficient so as to fill the interior of the dispenser 16 substantially or completely full of liquid heavy cream 17. In one example, the liquid heavy cream 17 can be filled into dispenser 16 in an amount where the weight can be up to about 2 kg. Optionally, the outer surfaces 29 of the arm-like structures 30 can be gloved with rubber-like materials to impart additional friction therealong, which can prevent displacement or slippage of the arm-like structures 30 during the process of agitation. The arm-like structures 30 are preferably power driven by a motor. The direction of oscillation preferably occurs in a substantially linear or straight back-and-forth direction and at a pre-set frequency, as opposed to a circular-like movement of the dispenser 16. The benefit of the auto shaking, relative to conventional agitation where the operator has to manually shake the dispenser (e.g., 20 times or more and repeat the same procedure 10 times or more to make whipped cream in a work shift) allows the operator to step away during shaking and settling to perform another operation, thereby saving labor and time invested in the manufacture of the final whipped cream products. Further, the appearance and foam-like consistency of the final whipped cream products when performed in accordance with the system of the present invention is superior to that created by conventional means.

## Claims

1. A portable, pressurized delivery apparatus (1) adapted for charging nitrous oxide of a food-grade purity into a dispenser (16) containing liquid heavy cream, comprising:

a vessel (3) **characterized by** an effective diameter and longitudinal axis, said effective diameter reduced to a tapered region (4) along the longitudinal axis of the vessel, said vessel further defined by an interior region (5) having a water volume of up to 10 liters in which said food-grade nitrous oxide is occupied therewithin and maintained under pressure;

a valve integrated pressure regulator (VIPR) (6) operably connected to said tapered region (4) and contained within a shrouded structure (7), said VIPR having a unitary structure along the longitudinal axis, said VIPR defined, at least in part, by multiple components including a pressure regulator (8), a pressure relief device (9), a pressure gauge (10), a fill port (13) along one portion (11) of the VIPR, a delivery port (14) along a second portion (12) of the VIPR, and an on-off valve (15), wherein each of said pressure regulator, said pressure relief device, said on-off valve and pressure gauge is substantially encapsulated within said shrouded structure;

said pressure gauge (10) having a first visual color indicator to indicate a first vessel pressure that is adequate to provide the preset delivery pressure, and a second visual color indicator to indicate a second vessel pressure that is not adequate to provide the present delivery pressure.

said pressure regulator (8) configured to deliver said food-grade nitrous oxide at the preset delivery pressure ranging from 689 kPa (100 psi) to 2068 kPa (300 psi) into said dispenser (16) containing said liquid heavy cream;

said on-off valve (15) configured to allow flow of said food-grade nitrous oxide from the interior region into said delivery port (14) through which said food-grade nitrous oxide flows towards an inlet of the dispenser (16), and further wherein said on-off valve is configured to allow flow of said food-grade nitrous oxide from a source to the fill port into which said food-grade nitrous oxide flows into the interior region of the dispenser;

said pressure relief device (9) operably connected to an outlet (19) of said pressure regulator and configured to relieve pressure in the apparatus to a level that is at or below a pressure rating of the dispenser (16); and

said shrouded structure (7) further comprising a handle (20) to enable portability of the apparatus (1).

2. The portable, pressurized delivery apparatus of claim 1, wherein said on-off valve (15) is a turning knob-like structure.

3. The portable, pressurized delivery apparatus of claim 1, wherein said on-off valve (15) is a lever actuated handle.

4. The portable, pressurized delivery apparatus of claim 1, wherein said on-off valve (15), further comprising a check valve situated at the fill port (13).

5. The portable, pressurized delivery apparatus of claim 1, wherein said on-off valve (15), further comprising a hose (21) operably connected to the delivery port (14).

6. The portable, pressurized delivery apparatus of claim 1, wherein said pressure regulator (8) is configured to deliver food-grade nitrous oxide at the preset delivery pressure, P, where $P = c + KR_{CD}$, where

$R_{CD}$ is the ratio between a volume of said liquid heavy cream and a total volume of the dispenser (16);
c is a first empirical constant; and
k is a second empirical constant.

7. The portable, pressurized delivery apparatus of claim 6, wherein the preset delivery pressure, P, can range from $0.9*(c + kR_{CD})$ to $1.1*(c + kR_{CD})$.

8. The portable, pressurized delivery apparatus of claim 1, wherein said pressure regulator (8) has an orifice configured to receive said food-grade nitrous oxide at a vessel pressure from the interior region (5) and thereafter reduce the vessel pressure to the preset delivery pressure.

9. The portable, pressurized delivery apparatus of claim 1, configured to be assembled to the dispenser (16) by one or more fittings.

10. The portable, pressurized delivery apparatus of claim 1, further comprising a kit (24) to be used with the dispenser (16), said kit comprising a detachable dip tube (25) with a sparger (26) that can be assembled onto a receiving bore (27) of the dispenser.

11. The portable, pressurized delivery apparatus of claim 1, wherein the vessel (3) has a vessel pressure of 5272 kPa (750 psig).

12. The portable, pressurized delivery apparatus of claim 1, said apparatus configured for charging the food-grade nitrous oxide in the absence of a nitrous oxide cartridge.

13. The portable, pressurized delivery apparatus of claim 11, said kit (24) further optionally comprising arm-like structures (30) configured to at least partially extend around an outer surface (29) of the dispenser (16), said arm-like structures configured to oscillate at a pre-set frequency so as to vibrate dispenser to at least partially mix said delivered said food-grade nitrous oxide with said liquid heavy cream contained therewithin.

**Patentansprüche**

1. Tragbare, unter Druck stehende Abgabevorrichtung (1), die zum Einfüllen von Distickstoffoxid mit Reinheit von Lebensmittelqualität in einen Spender (16), der flüssigen Doppelrahm enthält, ausgelegt ist, umfassend:

   einen Behälter (3), **gekennzeichnet durch** einen effektiven Durchmesser und eine Längsachse, wobei der effektive Durchmesser entlang der Längsachse des Behälters zu einem verjüngten Bereich (4) reduziert ist, wobei der Behälter ferner durch einen Innenbereich (5) mit einem Wasservolumen von bis zu 10 Litern definiert ist, in dem das Distickstoffoxid in Lebensmittelqualität aufgenommen ist und unter Druck gehalten wird;
   einen in ein Ventil integrierten Druckregler (VIPR) (6), der mit dem verjüngten Bereich (4) funktional verbunden und in einer ummantelten Struktur (7) enthalten ist, wobei der VIPR eine einheitliche Struktur entlang der Längsachse aufweist, wobei der VIPR zumindest teilweise durch mehrere Komponenten definiert ist, die einen Druckregler (8), eine Druckentlastungsvorrichtung (9), ein Druckmessgerät (10), eine Einfüllöffnung (13) entlang eines Abschnitts (11) des VIPRs, eine Abgabeöffnung (14) entlang eines zweiten Abschnitts (12) des VIPRS und ein Ein-Aus-Ventil (15) einschließen, wobei der Druckregler und/oder die Druckentlastungsvorrichtung und/oder das Ein-Aus-Ventil und/oder das Druckmessgerät im Wesentlichen innerhalb der ummantelten Struktur eingekapselt sind;
   wobei das Druckmessgerät (10) einen ersten visuellen Farbindikator zum Anzeigen eines ersten Behälterdrucks, der ausreicht, um den voreingestellten Abgabedruck bereitzustellen, und einen zweiten visuellen Farbindikator zum Anzeigen eines zweiten Behälterdrucks, der nicht ausreicht, um den voreingestellten Abgabedruck bereitzustellen, aufweist.
   wobei der Druckregler (8) dazu konfiguriert ist, das Distickstoffoxid in Lebensmittelqualität bei dem voreingestellten Abgabedruck im Bereich von 689 kPa (100 psi) bis 2.068 kPa (300 psi) in den Spender (16) abzugeben, der den flüssigen Doppelrahm enthält;
   wobei das Ein-Aus-Ventil (15) dazu konfiguriert ist, einen Fluss des Distickstoffoxids in Lebensmittelqualität aus dem Innenbereich in die Abgabeöffnung (14) zu ermöglichen, durch die das Distickstoffoxid in Lebensmittelqualität zu einem Einlass des Spenders (16) fließt, und wobei ferner das Ein-Aus-Ventil dazu konfiguriert ist, einen Fluss des Distickstoffoxids in Lebensmittelqualität von einer Quelle zu der Einfüllöffnung zu ermöglichen, in die das Distickstoffoxid in Lebensmittelqualität in den Innenbereich des Spenders fließt;
   wobei die Druckentlastungsvorrichtung (9) funktional mit einem Auslass (19) des Druckreglers verbunden und dazu konfiguriert ist, Druck in der Vorrichtung auf ein Niveau abzubauen, das bei oder unter einem Nenndruck des Spenders (16) liegt; und
   wobei die ummantelte Struktur (7) ferner einen Griff (20) umfasst, um die Tragbarkeit der Vorrichtung (1) zu ermöglichen.

2. Tragbare, unter Druck stehende Abgabevorrichtung nach Anspruch 1, wobei das Ein-Aus-Ventil (15) eine drehknopfartige Struktur ist.

3. Tragbare, unter Druck stehende Abgabevorrichtung nach Anspruch 1, wobei das Ein-Aus-Ventil (15) ein hebelbetätigter Griff ist.

4. Tragbare, unter Druck stehende Abgabevorrichtung nach Anspruch 1, wobei das Ein-Aus-Ventil (15) ferner ein Rückschlagventil umfasst, das sich an der Einfüllöffnung (13) befindet.

5. Tragbare, unter Druck stehende Abgabevorrichtung nach Anspruch 1, wobei das Ein-Aus-Ventil (15) ferner einen Schlauch (21) umfasst, der funktional mit dem Abgabeanschluss (14) verbunden ist.

6. Tragbare, unter Druck stehende Abgabevorrichtung nach Anspruch 1, wobei der Druckregler (8) dazu konfiguriert ist, Distickstoffoxid in Lebensmittelqualität bei dem voreingestellten Abgabedruck P abzugeben, wobei P = c + kRco, wobei

$R_{CD}$ das Verhältnis zwischen einem Volumen des flüssigen Doppelrahms und einem Gesamtvolumen des Spenders (16) ist;

c eine erste empirische Konstante ist; und

k eine zweite empirische Konstante ist.

7. Tragbare, unter Druck stehende Abgabevorrichtung nach Anspruch 6, wobei der voreingestellte Abgabedruck, P, im Bereich von 0,9* (c + kRco) bis 1,1* (c + kRco) liegen kann.

8. Tragbare, unter Druck stehende Abgabevorrichtung nach Anspruch 1, wobei der Druckregler (8) eine Mündung aufweist, die dazu konfiguriert ist, das Distickstoffoxid in Lebensmittelqualität bei einem Behälterdruck aus dem Innenbereich (5) aufzunehmen und den Behälterdruck danach auf den voreingestellten Abgabedruck zu reduzieren.

9. Tragbare, unter Druck stehende Abgabevorrichtung nach Anspruch 1, die dazu konfiguriert ist, an dem Spender (16) durch ein oder mehrere Anschlussstücke angebaut zu werden.

10. Tragbare, unter Druck stehende Abgabevorrichtung nach Anspruch 1, ferner umfassend ein Set (24), das mit dem Spender (16) zu verwenden ist, wobei das Set ein abnehmbares Tauchrohr (25) mit einem Verteiler (26) umfasst, der an eine Aufnahmebohrung (27) des Spenders angebaut werden kann.

11. Tragbare, unter Druck stehende Abgabevorrichtung nach Anspruch 1, wobei der Behälter (3) einen Behälterdruck von 5.272 kPa (750 psig) aufweist.

12. Tragbare, unter Druck stehende Abgabevorrichtung nach Anspruch 1, wobei die Vorrichtung zum Einfüllen des Distickstoffoxids in Lebensmittelqualität in Abwesenheit einer Distickstoffoxidpatrone konfiguriert ist.

13. Tragbare, unter Druck stehende Abgabevorrichtung nach Anspruch 11, wobei das Set (24) ferner optional armartige Strukturen (30) umfasst, die dazu konfiguriert sind, sich zumindest teilweise um eine Außenfläche (29) des Spenders (16) zu erstrecken, wobei die armartigen Strukturen so konfiguriert sind, dass sie mit einer voreingestellten Frequenz schwingen, um den Spender vibrieren zu lassen, um das abgegebene Distickstoffoxid in Lebensmittelqualität mit dem darin enthaltenen flüssigen Doppelrahm zumindest teilweise zu mischen.

## Revendications

1. Appareil portable de libération sous pression (1) conçu pour charger de l'oxyde nitreux d'une pureté de qualité alimentaire dans un distributeur (16) contenant une crème épaisse liquide, comprenant :

un récipient (3) **caractérisé par** un diamètre effectif et un axe longitudinal, ledit diamètre effectif réduit vers une région effilée (4) le long de l'axe longitudinal du récipient, ledit récipient défini en outre par une région intérieure (5) ayant un volume d'eau allant jusqu'à 10 litres dans lequel ledit oxyde nitreux de qualité alimentaire est occupé à l'intérieur de celui-ci et maintenu sous pression ;

un régulateur de pression à soupape intégrée (VIPR) (6) relié opérationnellement à ladite région effilée (4) et contenu à l'intérieur d'une structure carénée (7), ledit VIPR ayant une structure d'un seul tenant le long de l'axe longitudinal, ledit VIPR défini, au moins en partie, par de multiples composants incluant un régulateur de pression (8), un dispositif limiteur de pression (9), un manomètre (10), un orifice de remplissage (13) le long d'une partie (11) du VIPR, un orifice de libération (14) le long d'une deuxième partie (12) du VIPR, et une soupape marche-arrêt (15), dans lequel chacune parmi ledit régulateur de pression, ledit dispositif limiteur de pression, ladite soupape marche-arrêt et le manomètre est sensiblement encapsulé à l'intérieur de ladite structure carénée ;

ledit manomètre (10) ayant un premier indicateur visuel coloré pour indiquer une première pression de récipient qui est adéquate pour fournir la pression de libération prédéfinie, et un deuxième indicateur visuel coloré pour indiquer une deuxième pression de récipient qui n'est pas adéquate pour fournir la présente pression de libération.

ledit régulateur de pression (8) configuré pour libérer ledit oxyde nitreux de qualité alimentaire à la pression de libération prédéfinie allant de 689 kPa (100 psi) à 2068 kPa (300 psi) dans ledit distributeur (16) contenant ladite crème épaisse liquide ;

ladite soupape marche-arrêt (15) configurée pour permettre un écoulement dudit oxyde nitreux de qualité alimentaire à partir de la région intérieure dans ledit orifice de libération (14) par l'intermédiaire duquel ledit oxyde nitreux de qualité alimentaire s'écoule en direction de l'entrée du distributeur (16), et dans lequel en outre ladite soupape marche-arrêt est configurée pour permettre un écoulement dudit oxyde nitreux de qualité alimentaire à partir d'une source vers l'orifice de remplissage dans lequel ledit oxyde nitreux de qualité alimentaire s'écoule dans la région intérieure du distributeur ;

ledit dispositif limiteur de pression (9) relié opérationnellement à une sortie (19) dudit régulateur de pression et configuré pour relâcher la pression dans l'appareil à un niveau qui est égal ou inférieur à une pression nominale du distributeur (16) ; et

ladite structure carénée (7) comprenant en outre une poignée (20) pour permettre une portabilité de l'appareil (1).

2. Appareil portable de libération sous pression selon la revendication 1, dans lequel ladite soupape marche-arrêt (15) est une structure de type bouton rotatif.

3. Appareil portable de libération sous pression selon la revendication 1, dans lequel ladite soupape marche-arrêt (15) est une poignée actionnée par levier.

4. Appareil portable de libération sous pression selon la revendication 1, dans lequel ladite soupape marche-arrêt (15), comprend en outre un clapet antiretour situé au niveau de l'orifice de remplissage (13).

5. Appareil portable de libération sous pression selon la revendication 1, dans lequel ladite soupape marche-arrêt (15), comprend en outre un tuyau flexible (21) relié opérationnellement à l'orifice de libération (14).

6. Appareil portable de libération sous pression selon la revendication 1, dans lequel ledit régulateur de pression (8) est configuré pour libérer de l'oxyde nitreux de qualité alimentaire à la pression de libération prédéfinie, P, où P = c + kRco, où

$R_{CD}$ est le rapport entre un volume de ladite crème épaisse liquide et un volume total du distributeur (16) ;
c est une première constante empirique ; et
k est une deuxième constante empirique.

7. Appareil portable de libération sous pression selon la revendication 6, dans lequel la pression de libération prédéfinie, P, peut aller de 0,9*(c + kRco) à 1,1*(c + kRco).

8. Appareil portable de libération sous pression selon la revendication 1, dans lequel ledit régulateur de pression (8) a une ouverture configurée pour recevoir ledit oxyde nitreux de qualité alimentaire à une pression de récipient à partir de la région intérieure (5) et par la suite réduire la pression de récipient à la pression de libération prédéfinie.

9. Appareil portable de libération sous pression selon la revendication 1, configuré pour être assemblé au distributeur (16) par un ou plusieurs raccords.

10. Appareil portable de libération sous pression selon la revendication 1, comprenant en outre un nécessaire (24) à utiliser avec le distributeur (16), ledit nécessaire comprenant un tube plongeur détachable (25) avec un asperseur (26) qui peut être assemblé sur l'alésage de réception (27) du distributeur.

11. Appareil portable de libération sous pression selon la revendication 1, dans lequel le récipient (3) a une pression de récipient de 5272 kPa (750 psig).

12. Appareil portable de libération sous pression selon la revendication 1, ledit appareil configuré pour charger l'oxyde nitreux de qualité alimentaire en l'absence d'une cartouche d'oxyde nitreux.

13. Appareil portable de libération sous pression selon la revendication 11, ledit nécessaire (24) comprenant facultativement en outre des structures de type bras (30) configurées pour s'étendre au moins partiellement autour d'une surface externe (29) du distributeur (16), lesdites structures de type bras configurées pour osciller à une fréquence prédéfinie de façon à faire vibrer le distributeur pour mélanger au moins partiellement ledit oxyde nitreux de qualité alimentaire libéré avec ladite crème épaisse liquide contenue à l'intérieur de celui-ci.

**FIG. 1**

VIPR with Shroud on Cylinder Overview

Front

**FIG. 2A**

Side

FIG. 2B

Other side

FIG. 2C

Shroud Dissembled

15

7

13

14

A    B

FIG. 3

VIPR on Cylinder Overview

Front

FIG. 4A

Side

FIG. 4B

Other side

**FIG. 4C**

**FIG. 5A**

FIG. 5B

FIG. 6B

FIG. 6A

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007000952 A